# EUROPEAN PATENT APPLICATION

(11) **EP 4 793 025 A1**
(43) Date of publication of application: **19.08.2026**
(21) Application number: 26157171.5
(22) Date of filing: 09.02.2026
(51) Int. Cl.: B29C 65/36, B29C 65/38, B29C 65/74, B65B 51/30, B29L 31/00

(54) **METHOD AND SYSTEM FOR MONITORING THE STATUS OF A JAW SYSTEM IN A PACKAGING MACHINE, PACKAGING MACHINE AND COMPUTER PROGRAM PRODUCT THEREOF**

(30) Priority: 13.02.2025 IT 202500002754
(71) Applicant: Tetra Laval Holdings & Finance S.A., 1009 Pully (CH)
(72) Inventor: CAPELLI, Luca, 41123 MODENA (IT); DI CANOSA, Raffaele, 41123 MODENA (IT)
(74) Representative: Tetra Pak Patent Attorneys

(57) **Abstract**

Method for monitoring the status of a jaw system **(8)** in a packaging machine **(1),** the jaw system **(8)** being configured to transversally seal a web of packaging material **(3)** in the form of a tube **(2)** to form a transverse seal **(TS)** in the tube **(2);** the method comprises the steps of: acquiring **(S200)** a signal (**Sₚ**) indicative of the variation over time of a pressure exerted by at least one jaw **(9)** of the jaw system **(8)** during operation of the same jaw system **(8);** processing **(S201)** the acquired signal (**Sₚ**) to determine one or more indicators **(I)** indicative of the occurrence of possible anomalies in the operation of the jaw system **(8)** of the packaging machine **(1);** and adjusting (**S202**) the operation of the jaw system **(8)** based on the determined one or more indicators **(I).**

## Description

### TECHNICAL FIELD OF THE INVENTION

The invention relates generally to the field of status monitoring of the package production in a packaging machine, in particular a food packaging machine; in further detail, the present invention relates to a method and a system for monitoring the status of a jaw system in a packaging machine, a packaging machine and a related computer program product thereof.

### STATE OF THE ART

As is known, many liquid or pourable food products, such as fruit juice, UHT (ultra-high-temperature treated) milk, wine, tomato sauce, *etc.,* are sold in packages made of sterilized packaging material.

A typical example is the parallelepiped-shaped package for liquid or pourable food products known as Tetra Brik Aseptic^{®}, which is made by sealing and folding a laminated packaging material.

The packaging material has a multilayer sheet structure substantially comprising one or more stiffening and strengthening base layers typically made of a fibrous material, *e*.*g*. paper or cardboard, or mineral-filled polypropylene material, covered on both sides with one or more heat-sealable layers, *e*.*g*. polyethylene film. In the case of aseptic packages for long-storage products, such as UHT milk, the packaging material also comprises a gas- and light-barrier material layer, *e*.*g*. aluminum foil or ethyl vinyl alcohol (EVOH) film, which is superimposed on a heat-sealable layer, and is in turn covered with another heat-sealable layer forming the inner face of the package eventually contacting food product.

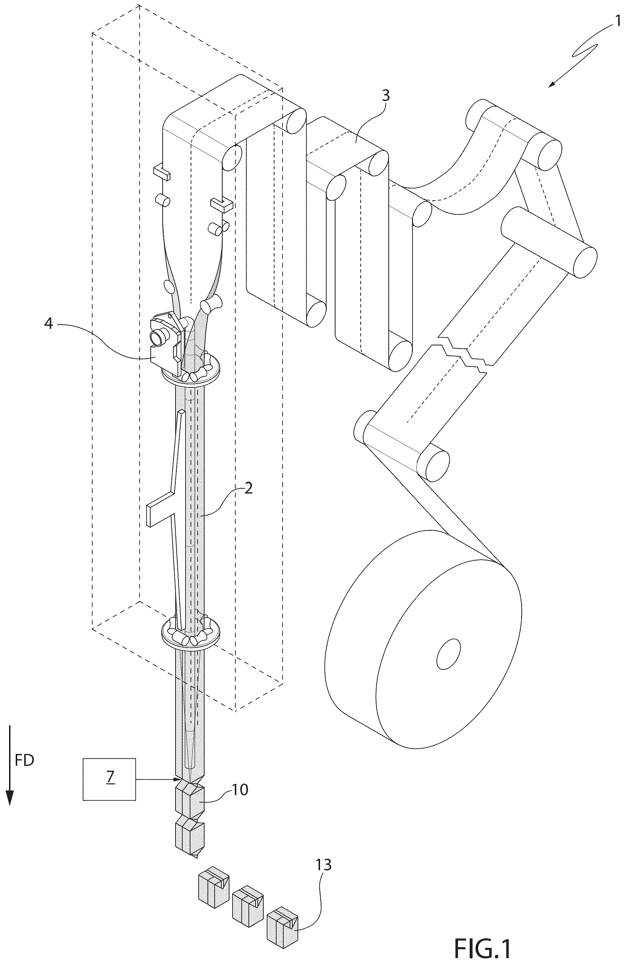

Packages of this type are normally produced on fully automatic packaging machines, also known as packaging or filling machines, of the type shown in Figure 1 as a nonlimiting example and referenced as a whole with reference numeral **1,** where a continuous (vertical) tube **2** is formed from a packaging web or web of packaging material **3,** in particular by overlapping opposite edges thereof through a folding and sealing unit **4,** wherein the tube **2** is sterilized in an aseptic or isolation chamber (not shown) of the packaging machine **1** by applying, *e.g.* a chemical sterilizing agent such as a hydrogen peroxide solution, or physical sterilization, such as by means of an electron beam. The packaging web **3** is maintained in a closed, sterile environment, in particular within an isolation chamber and is folded and then heat-sealed longitudinally to form the tube **2.**

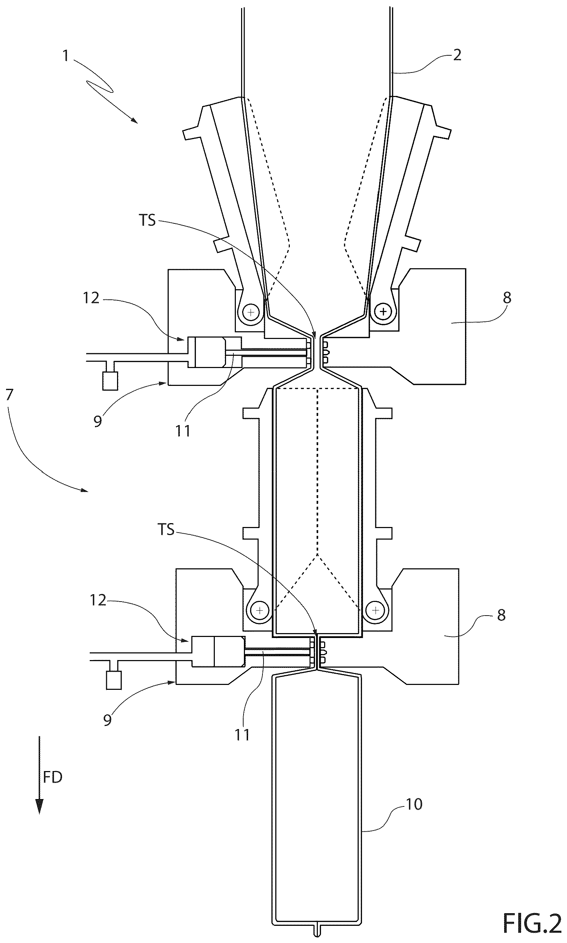

The tube 2 **is** filled with a sterilized or sterile-processed pourable food product by means of a filling pipe extending inside the tube **2.** The tube **2** is advanced along a vertical advancing direction to a forming station **7,** shown in detail in Figure 2, where it is gripped along equally spaced transversal sections by a jaw system **8** including two or more pairs of jaws **9** acting cyclically and successively on the tube **2** to form a continuous sequence of packs, here pillow packs, **10** connected to one another by transverse sealing bands or transverse sealings **TS.** The packs **10** are then separated from one another by cutting the sealing bands, in particular by means of knives **11** of a cutting system **12,** and are conveyed to a folding station (not shown), where they are folded mechanically into finished, *e.g.* substantially parallelepiped-shaped, packages or food packages **13.**

In particular, it is known that safe and reliable operation of the food packaging machines, like the packaging machine **1** of Figure 1, is of great significance since operational failures and ensuing production standstills may have a profound impact on production cost and product quality. Thus, early detection of operational deviations is of interest to improve operation of the packaging machine.

Although functionally valid, a need is felt to improve monitoring of the operation of the jaw system **8** of the packaging machine **1,** even when dealing with high-volume production of packages.

### OBJECT AND SUMMARY OF THE INVENTION

A need is felt to provide for systems and methods aimed at improving the proper monitoring and/or functioning of the packaging machine, in particular of the jaw system, when forming packages, in particular packages containing food products.

Thus, a desire is felt in the sector to provide for a method and a system for monitoring the status of a jaw system in a packaging machine, a packaging machine and a related computer program product.

The aim of the present invention is hence to develop a method and a system for monitoring the status of a jaw system in a packaging machine, a packaging machine and a related computer program product, thereby solving at least part of the abovementioned inconveniences.

This aim is achieved by the present invention, that relates to a method and a system for monitoring the status of a jaw system in a packaging machine, a packaging machine and a related computer program product, as claimed in the appended claims.

### BRIEF DESCRIPTION OF THE DRAWINGS

Figure 1 shows a perspective view, with parts removed for clarity, of a packaging machine operable to produce sealed packages containing pourable food products from a tube of packaging material.
Figure 2 shows a portion of the packaging machine of Figure 1.
Figure 3 schematically shows a system for monitoring the status of the jaw system in the packaging machine of Figure 1 according to the present invention.
Figure 4 a variation over time of the pressure exerted by the jaw system of the packaging machine of Figure 1 during operation of the same jaw system.
Figure 5 schematically shows a flow chart of a method for monitoring the status of the jaw system in the packaging machine of Figure 1 according to the present invention.
Figures 6A-6C show steps for forming a transverse seal on the packaging material.

### DETAILED DESCRIPTION OF THE INVENTION

Figure 2 shows a system **100** for monitoring the status of a jaw system of a packaging machine according to the present invention; in particular, elements in Figure 2 similar to the ones shown in Figure 1 are referred to in Figure 2 with the same reference numbers, without it being limiting to the present invention.

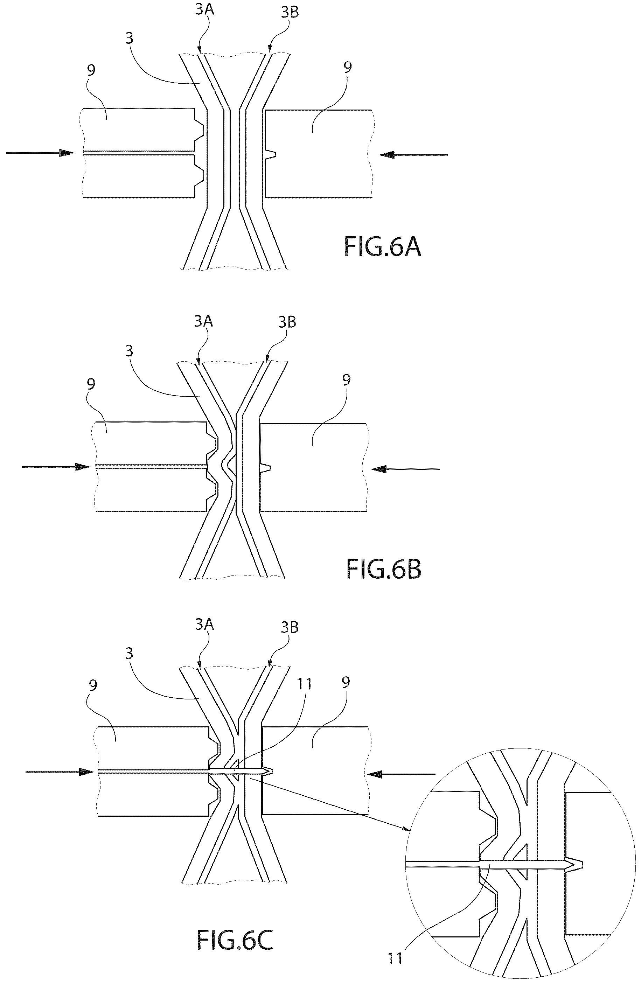

In particular, as also partly mentioned above, the jaw system **8** comprises a plurality of jaws **9,** here two pairs of jaws **9,** configured to operate to engage/disengage the tube **2** of packaging web **3** when operating to form a transverse seal **TS,** the latter being transverse with respect to a feeding direction **FD** along which the packaging web **3** moves in the packaging machine **1;** in further detail, the jaw system **8,** in particular the plurality of jaws **9,** is configured to engage and transversally seal the packaging web **3,** in particular with the cooperation of a sealing unit (not shown). The sealing unit comprises for example a heating unit configured to heat the packaging web **3** when it is engaged by the jaw system **8.** The engaged packaging web **3** may be in the form of the tube **2** to form the transverse seal **TS** in the tube **2.** In particular, as also disclosed in further detail with reference to Figures 6A-6C, when operating, the plurality of jaws **9** is configured to engage the tube **2** at a first stage and apply pressure therein to allow the formation of the transverse seal **TS.** In particular, a jaw **9** is configured to, after the transverse seal **TS** is formed, in particular thanks to a combination of the pressure applied by the jaw **9** and a heat applied by the sealing unit, disengage from the tube **2.** This way, a pillow pack **10** is formed.

It is noted that the present disclosure will refer to packaging machines **1** having a jaw system **8** which is a hydraulic system, without it being limiting to the present invention as long as the transverse sealing **TS** is carried out in the manner disclosed in the disclosure herein reported.

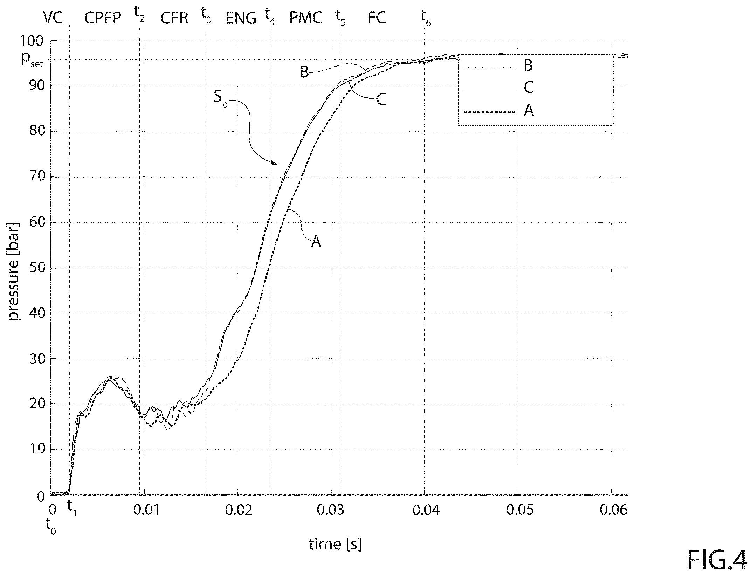

The system **100** comprises:
- a sensory system **101** arranged at the plurality of jaws **9** of the jaw system **8** and configured to generate a signal **Sₚ**, shown in particular in Figure 4, indicative of a variation over time of the pressure exerted by at least one jaw **9 of** the jaw system **8** in particular on the tube **2** during operation of the same jaw system **8;** and
- electronic processing resources **102** configured to be in communication with the sensory system **101,** *e.g.* wireless or wired communication.

In particular, the variation over time of the pressure exerted on the tube **2** represented by acquired signal **Sₚ** is associated with one or more parameters relating to the operation of the jaw system **8,** *e.g.* process parameters like temperature, expected pressure, electrical quantitiesrelating to the functioning of the same jaw system **8.** For example, the electrical quantities may include sealing parameters such as one or more of sealing electric voltage, sealing electrical current, frequency of the generator, voltage/current phase, sealing expected power and sealing actual power. Thus, the acquire signal **Sₚ** is also indirectly indicative of the process actuated by the packaging machine **1** for obtaining the packages **13.**

According to an aspect of the present invention, the electronic processing resources **102** are of a local type, *e.g.* they are implemented as a local unit; according to a further and alternative aspect of the present invention, electronic processing resources **102** are of a distributed type, *e*.*g*., on nodes in a network, and implementing paradigms such as cloud computing. Without it being limiting to the present invention, the electronic processing resources **102** are hereinafter of the local type.

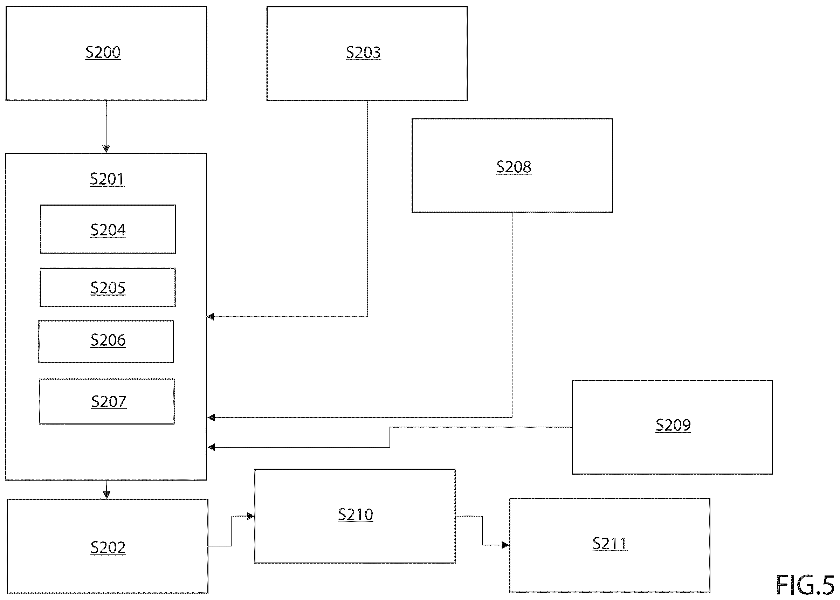

In particular, also referring to Figure 5, the electronic processing resources **102** are configured to:
- receive (block **S200)** the acquired signal **Sₚ;**
- process (block **S201)** the acquired signal **Sₚ** to determine one or more indicators **I** indicative of the occurrence of possible anomalies in the operation of the jaw system **8** of the packaging machine **1;** and
- adjust (block **S202)** the operation of the jaw system **8** based on the determined one or more indicators **I.**

As also disclosed in further detail in the following, the step of adjusting may comprise one or more of:
- modifying a sealing impulse signal configured to cause a (e.g. induction heating) transversal sealing of a sealing band on the tube **2,**
- modifying a knife signal configured to activate a movement of the knives **11** of the cutting system **12** to allow formation of the packages **13,**
- adjusting a cool time window between the sealing impulse and commanding the disengagement of the jaw system **(8)** from the sealed packaging web **(3),** i.e. a time window between heating and cooling of the heat-sealable layer.

In particular, examples of the acquired signal **Sₚ** are shown in Figure 4. Figure 4 shows the variation over time of the pressure applied by the jaw system **8** in case of absence of packaging material **3** to be sealed (curve **A),** and in case of presence of a first and second type of packaging material, having different thickness or stiffness properties (curves **B** and **C).**

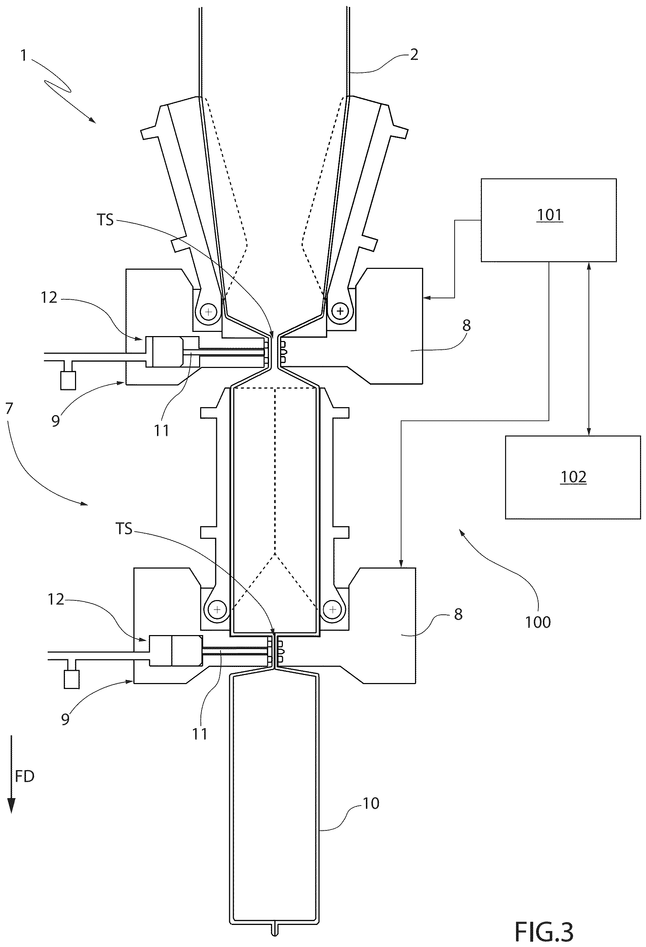

In further detail, referring to Figure 3, the signal **Sₚ** comprises several portions, each representing of a phase of the sealing pressure application process of the tube **2,** in particular of the pressure applied by at least one jaw **9** to the tube **2** for forming the transverse seal **TS;** by way of example and without it being limiting to the present invention, referring in particular to Figure 3, the signal **Sₚ** comprises a portion **VC,** also referred to "valve commutation" and here comprised between a first time instant **t₀** and a second time instant **t₁,** wherein a commutation of a valve system (not shown in Figures 1-3) is actuated so as to induce the operation of the jaw system **8.** Here, the applied pressure to the tube **2** is null or negligible. The first time instant **t₀** may be a time instant at which the valve receives a digital activation signal, *e.g.* 0 s.

Furthermore, the signal **Sₚ** also comprises a portion **CPFP,** also referred to "circuit pressure fill phase" and here comprised between the second time instant **t₁** and a third time instant **t₂**, wherein the jaw system 8 is pressurize to move a cylinder (not shown) of the same jaw system 8; in this way, the actuator of the jaw system 8 moves thanks to the pressure reaching a predetermined threshold value and a volume expansion occurs.

Furthermore, the signal **Sₚ** also comprises a portion **CFR,** also referred to as "catchers free run" and here comprised between the third time instant **t₂** and a fourth time instant **t₃**, wherein the motion of the jaw system **8** is started after a pressure rise, in particular of the catchers of the at least one jaw **9** (shown in Figures 2 and 3). In particular, the electronic processing resources **102** may be configured to compare the signal **Sₚ** with a predetermined motion profile and/or predetermined pressure signal, indicative of ideal operation of at least one of the jaw **9.**

The signal **Sₚ** also comprises a portion **ENG,** also referred to "engagement and compression", and here comprised between the fourth time instant **t₃** and a fifth time instant **t₄** wherein the catchers of the at least one jaw **9** engage with the tube **2** for starting to form the transverse seal **TS;** in particular, here, the signal **Sₚ** is characterized by an oscillation at high frequency, *e.g.* comprised between 0 kHz and 3 kHz, and is thus indicative of the fact that the pressure applied by the jaws **9** varies when approaching the tube **2** of packaging material **3.** It is noted that the oscillations in pressure in portion **ENG** are smoother in curves **B and C** with respect to curve **A,** meaning that the presence of the packaging material **3** between the catchers of the at least one jaw **9** introduces a damping effect that smoothes said oscillations.

Furthermore, the acquired signal **Sₚ** comprises a portion **PMC,** also referred to as "pack material compression", and here comprised between the fifth time instant **t₄** and a sixth time instant **t₅**, wherein the packaging material **3** of the tube **2** is here compressed by the jaw system **8** for forming the transverse seal **TS.** It is noted that, in the portion **PMC,** the pressure significantly rises (meaning that an increasing pressure is exerted over time on the tube) even with respect to the pressure applied by the jaw system **8** in absence of the packaging material **3,** *i.e.* represented by curve **A.** Thus, the Applicant notes that curves **B and C** are indicative of a visible squeeze of the packaging material **3** with respect to curve **A,** as the pressure is significantly higher than the one represented by curve **A.** Furthermore, the Applicant also notes that, if no packaging material **3** is present, the pressure is temporally shifted on the right; this is due to the fact that the lack of packaging material **3** between the catchers of the at least one jaw **9** means that a larger gap between said catchers is present (thus, pressure reaches certain values in a longer period of time, see curve **A),** while, when the packaging material **3** is present, the gap between the catchers is smaller and, thus, the pressure applied therein increases in advance with respect to the pressure shown in curve **A** (see curves **B and C,** where the pressure increases almost immediately).

In addition, the acquired signal **Sₚ** comprises a portion **FC,** also referred to as "final closure", and here comprised between the sixth time instant **t₅** and a seventh time instant **t₆,** wherein the packaging material **3** is still compressed between the catchers of the at least one jaw **9** to complete the sealing pressure application process and forming the definitive transverse sealing **TS** on the tube **2** of packaging material **2.** In this situation, the rigidity of the jaw system **8,** *i.e.* the rigidity of the spring of the jaws **9,** increases and the pressure is increased to a mechanical stop, meaning that the pressure increases until the latter reaches a setpoint value **pₛₑₜ.** It is also noted that, in this case, the catchers of the at least one jaw **9** do not further move, meaning that the sealing pressure application process is finalized.

Furthermore, the acquired signal **Sₚ** comprises a portion **SS,** also referred to as "steady state", and here starting from the seventh time instant **t₆**, wherein the pressure is determined to be at the setpoint value **pₛₑₜ.** During this portion **SS,** the transverse sealing is performed, *i.e.* a sealing impulse is sent to the jaw system **8** and, after performing the sealing, a disengagement of the jaw system **8** from the tube **2** occurs. It is noted that the disengagement phase is performed after a cool down time window passes from the end of the sealing pressure application process, meaning that the jaw system **8** disengages from the sealed tube **2** after a while to allow, *e.g.,* the cooling down of the sealing, so as to finalize the sealing itself of the pillow packs **10** and, thus, the packages **13.** After the pressure reaches the setpoint value **pₛₑₜ** and the transverse sealing is complete, the catchers are commanded to disengage from the packaging material **3.**

Figures 6A-6C shows the main steps for forming the transverse seal **TS** on the tube **2** of packaging material **3** by means of the sealing unit, in particular the jaw system **8** and the cutting system **12.**

Referring to figure 6A, the catchers of the at least one jaw **9** engage the packaging material **3,** which is thus subjected to a sealing pressure **p;** this step is represented in particular by portions **VC, CPFP, CRF, ENG** and **PMC** of curves **B and C** shown in Figure 4. In fact, after engaging the packaging material, the jaw system **8** applies the pressure **p** to bring opposite internal surfaces **3A, 3B** of the packaging material **3** together for forming the transverse seal **TS.**

Referring to Figure 6B, after pressing the surfaces **3A, 3B** together, the heating unit of the sealing unit heats the packaging material **3** to perform the heat-sealing of the same to form the transverse sealing **TS.**

Afterwards, referring to Figure 6C, the heating unit is turned off and, while the jaw system **8** still engages the packaging web **3** to keep the surfaces **3A, 3B** pressed together, the transverse sealing **TS** is cooled down; following, the cutting unit **12** is configured, by means of the knives **11** of the same cutting system **12,** to perform a cut at the transverse sealing **TS.**

The abovementioned operations are carried out at a certain frequency, namely after a certain length of the packaging material **3,** the latter being in particular the length of the pillow pack **10** and, thus, of the package **13** to be formed; thus, multiple transverse sealings TS are formed in a single tube **2** of packaging material **3.** Furthermore, according to an aspect of the present invention, the jaw system **8** may comprise a plurality of jaws **9,** distanced one another of the abovementioned length and each coupled to a respective heating unit.

Referring once again to Figure 5, the electronic processing resources **102** are also configured to receive (block **S203)** one or more signals among:
- a signal **Sⱼₒⱼ** indicative of the engagement between the packaging web **3** and the jaw system **8;**
- a signal **S_{ac}** indicative of an activation command of the at least one jaw **9** of the jaw system **8;**
- a signal **Sₛₚ** indicative of a sealing pulse for transversally sealing the tube **2;** and
- a signal **S_{acs}** indicative of the command for activating the knives **11** of the cutting system **12** for cutting the tube **2** of packaging material **3** along the transverse sealing formed on the tube **2.**

The electronic processing resources **102** are thus configured to process (block **S201)** the acquired signal **Sₚ** by:
- filtering (block **S204)** the acquired signal **Sₚ** with the signal **Sⱼₒⱼ** indicative of the engagement between the web of packaging material **3** and the jaw system **8** to determine if the jaw system **8** engaged the web of packaging material **3** at an expected position **Pₑₓₚ**, *i.e.* the jaw system **8** is positioned correctly with respect to the tube **2** for the formation of the transverse sealing **TS;**
- filtering (block **S205)** the acquired signal **Sₚ** with the signal **S_{ac}** indicative of an activation command of the jaws **9** of the jaw system **8** to determine a time interval between a time instant **t₁** wherein the activation command is received, in particular by the jaw system **8,** and a time instant **t₂** wherein the jaws **9** of the jaw system **8** are operated;
- filtering (block **S206)** the acquired signal **Sₚ** with the signal **Sₛₚ** indicative of a sealing pulse for transversally sealing the tube **2** of packaging material **3** to determine one or more parameters indicative of the operation of the jaw system **8** during the transverse sealing of the tube **2;** and
- filtering (block **S207)** the acquired signal **Sₚ** with the signal **S_{acs}** indicative of the command for activating the knives **11** of the cutting system **12** for cutting the tube **2** of packaging material **3** along the transverse sealing formed on the tube **2** to determine the occurrence of an anomaly in the operation of the jaw system **8.**

According to a further aspect of the present invention, the electronic processing resources **102** are further configured to acquire (block **S208)** data relative to a type of packaging material of a package **13;** in particular, by way of example and not limiting to the present invention, the electronic processing resources **102** may be in communication with a (central machine) processing unit **103** configured to print an identification code, e.g. a QR code or the like, on the package **13** and/or on the pillow pack **10** to provide for data indicative of the type of package **13** or pillow pack **10,** thereby allowing traceability of the package **13** and /or the pillow pack **10** itself. Consequently, said electronic processing resources **102** are configured to read, in particular through a dedicated and connected thereto reading module **104,** the abovementioend identification code to acquire and process the information integrated thereto, *e.g.* to perform the adjusting step.

The electronic processing resources 102 may be configured to process **S201** the acquired signal **Sₚ** as well as the data relative to the type of packaging material **3** to determine one or more indicators **I** indicative of the occurrence of possible anomalies. Advantageously, any difference in the signal that may be due to the packaging material may be correctly identified.

According to a further aspect of the present invention, the electronic processing resources **102** are further configured to acquire (block **S209)** data relative to electrical quantities indicative of a sealing operation of the jaws **9** of the jaw system **8;** without it being limiting to the present invention and by way of example, the sensory system **101** is configured to acquire the abovementioned electrical quantities (e.g. current, voltage, phase etc.) and to output data thereof to be transmitted to the electronic processing resources **102.** Consequently, said electronic processing resources **102** are configured to process said data, *e.g.* to perform the adjusting step.

In addition, the electronic processing resources **102** are further configured to process (block **S201)** the acquired signal **Sₚ** by determining one or more raw signals **S_{raw}** as a result of the step(s) of filtering. Therefore, the electronic processing resources **102** are configured to carry out the abovementioned filtering step(s) to extract information from the acquired signal **Sₚ** and, thus, determine the abovementioned indicators **I** for evaluating the operation of the jaw system **8.**

Furthermore, the electronic processing resources **102** are configured to process (block **S201)** the acquired signal **Sₚ** by applying a classification model receiving as an input the one or more raw signals **S_{raw}** and providing as an output one or more classes **C₁, C₂** indicative of the occurrence of possible anomalies in the operation of the jaw system **8** of the packaging machine **1** and the related one or more indicators **I.** In particular, the one or more classes **C₁, C₂** comprise a first class **C₁** indicative of the occurrence of a possible anomaly in the operation of the jaw system **8** of the packaging machine **1;** and a second class **C₂** indicative of the absence of a possible anomaly in the operation of the jaw system **8** of the packaging machine **1.**

According to an aspect of the present invention, the classification model is obtained after training a dedicated algorithm, loaded in and executable by the electronic processing resource **102,** on a set of training data, the latter being a database of data derived from signals indicative of a variation over time of the pressure exerted by at least one jaw **9** of the jaw system **8** on the tube **2** of packaging material **3,** *i.e.* data from signals like the signal **Sₚ** and/or like the one or more raw signals **S_{raw}.** According to an aspect of the present invention, in case the algorithm is trained in a supervised manner, each data of the set of training data is associated with respective labels, the latter being related to the presence/absence of anomalies in the operation of the jaw system **8.** Thus, electronic processing resource **102** are configured to obtain the classification model by:
- providing a portion of data from the set of training data with the associated labels to the algorithm in order for the latter to classify each data and, thus, determine a classification model;
- classifying the remaining data of the set of training data by means of the classification model, the remaining data being provided without the respective labels;
- evaluating the accuracy of the classification model based on the classification operated by the algorithm and the labels associated with the remaining data; and
- refining the classification model based on the calculated accuracy, *i.e.* re-training the classification model on the basis of the calculated accuracy.

According to a further aspect of the present invention, the algorithm may also be trained in an unsupervised or partially supervised manner, meaning that the set of training data may be either fully non-labelled (unsupervised) or at least partially labelled (partially supervised). In these cases, the classification model may be obtained, *e.g.,* by providing training data only related to the presence or absence of anomalies, so that the algorithm may recognize such anomalies based on the provided data.

It is also noted that, from the classification, it is also possible to derive the indicators **I,** here the quantities that are more indicative of the operation of the jaw system **8** on the tube **2** and that allow to discriminate between the occurrence of a anomalies or not.

The electronic processing resources **102** are further configured to process(block **S201)** the acquired signal **Sₚ** by determining one or more statistical quantities, *e.g.* variance, standard deviation and the like, related to the operation of the jaw system **8** over time as indicators **I** of the occurrence of possible anomalies in the operation of the jaw system **8** of the packaging machine **1** based on the one or more raw signals **S_{raw}.**

Therefore, the electronic processing resources **102** are configured to determine the one or more indicators **I** based on the processing step of the acquired signal **Sₚ,** in particular based on the result of the classification model and/or the determined one or more statistical quantities. Relating to the classification step, the electronic processing resources **102** are configured to determine the one or more indicators **I** based on the one or more classes **C₁, C₂;** in further detail, when determining and training the classification model, anomaly detection is used to train the classification model to discern between the presence or absence of anomalies, thereby also determining the one or more indicators **I** associated with the abovementioned distinction. In case deep learning is used, the one or more indicators **I** are (automatically) extracted when obtaining the classification model.

Relating to the step of determining one or more statistical quantities, the electronic processing resources **102** is configured to implement one or more steps of the method disclosed in the European Patent EP 3 974 131 B1, in particular to determine one or more among inter- or intra-variability values relating to the one or more raw signals **S_{raw}.**

The electronic processing resources **102** are further configured to generate (block **S210)** a notification for the user relative to the occurrence of a possible anomaly in the operation of the jaw system **8;** in this way, the electronic processing resources **102** are configured to provide an assistance to the user for adjusting the operation of the jaw system **8,** either automatically (*i.e.* without the need of an intervention by the user) or manually (*i.e.* by inducing the user to intervene directly on the packaging machine **1).** It is noted that the adjustment of the operation of the jaw system **8** and, thus, of the packaging machine 1 is carried out by modifying the process parameters associated therein, so that the packages **13** are outputted from the packaging machine **1** as defined.

The electronic processing resources **102** are further configured to command (block **S211)** the discard, preferably automatically, of packages **13** formed from the tube of packaging material transversally sealed by means of the jaw system **8** if the jaw system **8** has been determined to present an occurrence of a possible anomaly in its operation. In this way, the electronic processing resources **102** provide a further assistance to the user, in particular by allowing to discard any package **13** associated with the occurrence of an anomaly in the operation of the jaw system **8.**

The advantages that the present invention allows to achieve may be readily appreciated by the skilled person.

In particular, the present method and system **100** allows a detection of early deviation in the operation of the jaw system **8,** in particular the pressure application for forming the transverse sealing **TS.**

Furthermore, the present invention allows monitoring of engagement of the jaws **9,** in particular the catchers (not shown) therein.

Furthermore, the present invention allows to detect any hydraulic issue in the jaw system **8,** such as leakages, that would lead to the determination of a possible anomaly in the operation of the same jaw system **8.**

In conclusion, from the description above follows that, although various embodiments of the invention have been described and shown, the invention is not restricted thereto, but may also be embodied in other ways within the scope of the subject-matter defined in the following claims.

## Claims

1. Method for monitoring the status of a jaw system **(8)** in a packaging machine **(1),** the jaw system **(8)** being configured to transversally seal a web of packaging material **(3)** in the form of a tube **(2)** to form a transverse seal **(TS)** in the tube **(2),**
the method comprising the steps of:
- acquiring **(S200)** a signal **(Sₚ)** indicative of the variation over time of a pressure exerted by at least one jaw **(9)** of the jaw system **(8)** during operation of the same jaw system **(8);**
- processing **(S201)** the acquired signal **(Sₚ)** to determine one or more indicators **(I)** indicative of the occurrence of possible anomalies in the operation of the jaw system **(8)** of the packaging machine **(1);** and
- adjusting **(S202)** the operation of the jaw system **(8)** based on the determined one or more indicators **(I).**

2. The method according to claim **1** and further comprising acquiring one or more signals **(Sⱼₒⱼ, S_{ac}, Sₛₚ, S_{acs})** among a signal **(Sⱼₒⱼ)** indicative of the engagement between the web of packaging material **(3)** and the jaw system **(8),** a signal **(S_{ac})** indicative of an activation command of the at least one jaw **(9)** of the jaw system **(8),** a signal **(Sₛₚ)** indicative of a sealing pulse for transversally sealing the tube **(2)** of packaging material **(3)** and a signal **(S_{acs})** indicative of the command for activating knives **(11)** of a cutting system **(12)** for cutting the tube **(2)** of packaging material **(3)** along the transverse sealing **(TS),**
and wherein the step of processing **(S201)** further comprises at least one among the steps of:
- filtering **(S204)** the acquired signal **(Sₚ)** with the signal **(Sⱼₒⱼ)** indicative of the engagement between the web of packaging material **(3)** and the jaw system **(8)** to determine if the jaw system **(8)** engaged the web of packaging material **(3)** at an expected position **(Pₑₓₚ);**
- filtering **(S205)** the acquired signal **(Sₚ)** with the signal **(S_{ac})** indicative of an activation command of the at least one jaw **(9)** of the jaw system **(8)** to determine a time interval between a time instant wherein the activation command is received and a time instant wherein the at least one jaw **(9)** of the jaw system **(8)** is operated;
- filtering **(S206)** the acquired signal **(Sₚ)** with the signal **(Sₛₚ)** indicative of a sealing pulse for transversally sealing the tube **(2)** of packaging material **(3)** to determine one or more parameters indicative of the operation of the jaw system **(8)** during the transverse sealing of the tube **(2)** of packaging material **(3);** and
- filtering **(S207)** the acquired signal **(Sₚ)** with the signal **(S_{acs})** indicative of the command for activating the knives **(11)** of the cutting system **(12)** for cutting the tube **(2)** of packaging material **(3)** along the transverse sealing formed on the tube **(2)** to determine the occurrence of an anomaly in the operation of the jaw system **(8),**
and wherein the step of processing **(S201)** further preferably comprises determining one or more raw signals **(S_{raw})** as a result of the step(s) of filtering.

3. The method according to the previous claim, wherein the step of processing **(S201)** further comprises:
- applying a classification model receiving as an input the one or more raw signals **(S_{raw})** and providing as an output one or more classes **(C₁, C₂)** indicative of the occurrence of possible anomalies in the operation of the jaw system **(8)** of the packaging machine **(1)** and the related one or more indicators **(I),** and/or
- determining one or more statistical quantities related to the operation of the jaw system **(8)** over time as indicators of the occurrence of possible anomalies in the operation of the jaw system **(8)** of the packaging machine (1).

4. The method according to any one of the preceding claims and further comprising: acquiring **(S208)** data relative to a type of packaging material **(3)** of the web of packaging material **(3),** and
- processing **(S201)** the acquired signal **(Sₚ)** and the data relative to the type of packaging material **(3)** to determine one or more indicators **(I)** indicative of the occurrence of possible anomalies.

5. The method according to any one of the preceding claims and further comprising:
- acquiring **(S209)** data relative to electrical quantities indicative of a sealing operation of the at least one jaw **(9)** of the jaw system **(8),** and
- processing **(S201)** the acquired signal **(Sₚ)** and the electrical quantities to determine one or more indicators **(I)** indicative of the occurrence of possible anomalies.

6. The method according to any one of the preceding claims and further comprising generating **(S210)** a notification for the user relative to the occurrence of a possible anomaly in the operation of the jaw system **(8).**

7. The method according to any one of the preceding claims and further comprising discarding **(S211),** preferably automatically, packages formed from the tube **(2)** of packaging material **(3)** transversally sealed by means of the jaw system **(8)** if the jaw system **(8)** has been determined to present an occurrence of a possible anomaly in its operation.

8. The method according to any one of the preceding claims, wherein the step of adjusting **(S202)** further comprises at least one among:
- modifying a sealing impulse signal configured to cause a transversal sealing on a package **(13),**
- modifying a knife signal configured to activate the knives **(11)** of the cutting system **(12)** to allow formation of the packages **(13),**
- adjusting a cool time window between the sealing impulse and commanding the disengagement of the jaw system **(8)** from the sealed packaging web **(3).**

9. Computer program product loadable and executable by a system **(100)** for monitoring the status of a jaw system **(8)** in a packaging machine **(1)** and configured to cause, when executed, the system **(100)** to operate as according to a method monitoring the status of the jaw system **(8)** in the packaging machine **(1)** according to any one of the preceding claims.

10. System **(100)** for monitoring the status of a jaw system **(8)** in a packaging machine **(1),** the jaw system **(8)** being configured to transversally seal a web of packaging material **(3)** in the form of a tube **(2)** to form a transverse seal **(TS)** in the tube **(2),**
the system **(100)** comprising:
- a sensory system **(101)** arranged at at least one jaw **(9)** of the jaw system **(8)** and configured to generate **(S200)** a signal **(Sₚ)** indicative of the variation over time of a pressure exerted by the at least one jaw **(9)** of the jaw system **(8)** during operation of the same jaw system **(8);** and
- electronic processing resources **(102)** configured to be in communication with the sensory system **(101)** and configured to:
- receive **(S200)** the acquired signal **(Sₚ);**
- process **(S201)** the acquired signal **(Sₚ)** to determine one or more indicators **(I)** indicative of the occurrence of possible anomalies in the operation of the jaw system **(8)** of the packaging machine **(1);** and
- adjust **(S202)** the operation of the jaw system **(8)** based on the determined one or more indicators **(I).**

11. The system according to the preceding claim, wherein the electronic processing resources **(102)** are further configured to receive one or more signals **(Sⱼₒⱼ, S_{ac}, Sₛₚ, S_{acs})** among a signal **(Sⱼₒⱼ)** indicative of the engagement between the web of packaging material **(3)** and the jaw system **(8),** a signal **(S_{ac})** indicative of an activation command of the at least one jaw **(9)** of the jaw system **(8),** a signal **(Sₛₚ)** indicative of a sealing pulse for transversally sealing the tube **(2)** of packaging material **(3)** and a signal **(S_{acs})** indicative of the command for activating knives **(11)** of a cutting system **(12)** for cutting the tube **(2)** of packaging material **(3)** along the transverse sealing **(TS),**
and wherein the electronic processing resources **(102)** are configured to process **(S201)** the acquired signal **(Sₚ)** by:
- filtering **(S204)** the acquired signal **(Sₚ)** with the signal **(Sⱼₒⱼ)** indicative of the engagement between the web of packaging material **(3)** and the jaw system **(8)** to determine if the jaw system **(8)** engaged the web of packaging material **(3)** at an expected position **(Pₑₓₚ);**
- filtering **(S205)** the acquired signal **(Sₚ)** with the signal **(S_{ac})** indicative of an activation command of the at least one jaw **(9)** of the jaw system **(8)** to determine a time interval between a time instant wherein the activation command is received and a time instant wherein the at least one jaw **(9)** of the jaw system **(8)** is operated;
- filtering **(S206)** the acquired signal **(Sₚ)** with the signal **(Sₛₚ)** indicative of a sealing pulse for transversally sealing the tube **(2)** of packaging material **(3)** to determine one or more parameters indicative of the operation of the jaw system **(8)** during the transverse sealing of the tube **(2)** of packaging material **(3);** and
- filtering **(S207)** the acquired signal **(Sₚ)** with the signal **(S_{acs})** indicative of the command for activating the knives **(11)** of the cutting system **(12)** for cutting the tube **(2)** of packaging material **(3)** along the transverse sealing formed on the tube **(2)** to determine the occurrence of an anomaly in the operation of the jaw system **(8).**

12. The system **(100)** according to any one of the claims **10-11** and wherein the electronic processing resources **(102)** are further configured to acquire **(S209)** data relative to electrical quantities indicative of a sealing operation of the at least one jaw **(9)** of the jaw system **(8)** and to process **(S201)** the acquired signal **(Sₚ)** and the electrical quantities to determine one or more indicators **(I)** indicative of the occurrence of possible anomalies.

13. The system **(100)** according to any one of claims **10-12,** wherein the electronic processing resources **(102)** are configured to process the acquired signal by applying a classification model receiving as an input the one or more raw signals **(S_{raw})** and providing as an output one or more classes **(C₁, C₂)** indicative of the occurrence of possible anomalies in the operation of the jaw system **(8)** of the packaging machine **(1)** and the related one or more indicators **(I).**

14. The system according to any one of claims **10-13,** wherein the electronic processing resources (102) are further configured to adjust **(S202)** by performing at least one among:
- modifying a sealing impulse signal configured to cause a transversal sealing on a package **(13),**
- modifying a knife signal configured to activate the knives **(11)** of the cutting system **(12)** to allow formation of the packages **(13),**
- adjusting a cool time window between the sealing impulse and commanding the disengagement of the jaw system **(8)** from the sealed packaging web **(3).**

15. Packaging machine **(1)** for producing packages **(13)** from a packaging material **(3),** each package **(13)** being filled with a pourable product,
the packaging machine **(1)** comprising a jaw system **(8)** configured to transversally seal a web of packaging material **(3)** in the form of a tube **(2)** to form a transverse seal **(TS)** in the tube **(2),**
the packaging machine **(1)** further comprising a system **(100)** for monitoring the status of the jaw system **(8)** in the packaging machine according to any one of claims **10-14.**
